# EUROPEAN PATENT APPLICATION

(11) **EP 1 530 034 A1**
(43) Date of publication of application: **11.05.2005**
(21) Application number: 03025221.7
(22) Date of filing: 05.11.2003
(51) Int. Cl.: G01K 13/00, G01K 1/20

(54) **An infrared thermometer and a method for determining a temperature**

(71) Applicant: Microlife Intellectual Property GmbH, 9435 Heerbrugg (CH)
(72) Inventor: Yu-Chiao, Chi, Yang Mei town Tao Yuan county (TW)
(74) Representative: Müller, Christoph Emanuel

(57) **Abstract**

A forehead skin or other body surface skin thermometer (1) has an infrared sensor (11) located in the thermometer probe front for viewing and detecting the infrared radiation heat at a body site, e.g. of the body forehead centre area skin for the other body surface skin. Concurrent operating ambient temperature are also measured. The above measured forehead skin temperature or the other body surface skin temperature is used as a reference base. The above concurrently sensed operating ambient temperature is used as an index so as to access corresponding temperature of a first body site such as the oral or rectal temperature. A final temperature reading display is determined from a lookup table built inside a non-volatile memory (41).

## Description

### BACKGROUND OF THE INVENTION

The invention is directed to an infrared thermometer and to a method for determining the temperature according to the independent patent claims. For measuring body temperatures of patients it is known to use digital, electronic thermometers which may be based on the use of contact type temperature sensors or on infrared measurements. Infrared thermometers are widely used because of their fast measurement and their ease of use. In view of the diagnostic value for temperature measurement, there are differences between several measurement sites on the human body.

The hypothalamus is the most accurate site to obtain the body temperature. It is located in the base of the brain, and acts as the body's thermostat. The goal of the hypothalamus is to maintain the body's core temperature (heart, lungs, liver, kidneys, brain, etc).

Traditionally, body temperature has been detected by contact thermometers in oral, rectal, or axillary sites. These sites are chosen for convenience rather than correctness, due to there exist many factors to influence the accuracy, such as: unsteady and unsuitable placement of thermometer probe in the measuring site, drinking, talking, inexperienced measuring skill, etc.

Nowadays, by utilizing an infrared sensor to view and detect the tympanic membrane or ear drum's heat radiation inside the ear canal to display the body temperature in only one second, the Infrared ear thermometer has become a popular, quick body temperature measurement tool. However, there exists some drawback on using the infrared ear thermometer for getting the body temperature, such as:

Though it has been claimed as a non-invasive measuring thermometer, its probe head still needs to be inserted into the ear canal for temperature measuring. As the probe tip diameter is equal or even a little bit bigger than the normal adult's and especially the children's ear canal's regular diameter, when inserting the probe head into the ear canal, the close contact between the ear thermometer probe and the ear canal's internal skin wall will cause a rapid heat increase on the probe and result in a temperature rising on the infrared sensor's cold junction. This prevents from getting a stable or accurate temperature reading display. The close contact between the probe and the ear canal internal skin will also cool down the ear temperature after the continuous measurement with the repeated probe insertion into and pulling out of the ear canal. Moreover, the innate curvature structure inside the ear canal will make the probe inconsistently to be inserted into the ear canal for getting a consistent reading. Furthermore, the high moisture level leads to a low ear temperature reading caused by the residual amniotic fluid in neonates' ear canals, not mentioning about the inapplicability for newborn baby's small ear diameter, as about 5.5 mm, to be inserted with the bigger ear thermometer probe tip, with the diameter for about 7.5-8.0 mm. There are still some more usage concerns when using ear thermometers: The earwax may result in an inaccurate reading, the curvature structure inside the ear canal may cause an inconsistent measuring result due to the inappropriate probe positioning in the ear canal, the inconvenience and cost consuming concern for the necessity to put on the probe covers, the unreliable measurement reading display caused by the poor heat insulation design of the probe assembly, the disturbance to the sleeping patient (specially the infant or children) during the temperature measuring, the cool effect and low read concern from continuous measuring with repeated probe insertion into the ear canal within a short period of time, and the inapplicability for the bigger probe to be inserted into patient's ear, especially the concern of smaller ear diameter for children under aged two or even neonates.

By replacing the known ear thermometer with a body surface skin thermometer such as a forehead thermometer for getting a body temperature, the above problems are then solved. The forehead thermometer is a real non-invasive thermometer. The sensor inside the probe assembly will not be heated up by the body surface skin as the probe does not need to be inserted into the body cavity for getting the body temperature. With the probe's soft and smooth contact on the centre area of the forehead skin, the temperature can be easily detected and displayed. The body surface temperature is the result of the energy supplied from the core via the blood perfusion and the energy lost to the environment via radiation, convection, and evaporation. The reason to detect the body temperature from the forehead skin is that the blood vessel distributes for only about 0.1 mm beneath the forehead skin. The heat is easy to be detected, and the instant heat or temperature change will be quickly sensed, as the blood flow in the temporal arteries is extending from the carotid arteries. Moreover, using a forehead thermometer can eliminate the discomfort and inconvenience caused by the traditional contact pen type thermometer's probe insertion into the ear, mouth, or rectum.

However, since the body surface skin temperature will be easily affected by the ambient temperature change, the forehead skin temperature to be measured at different ambient temperatures is quite different, even when the core body temperature is about the same.

It thus has been suggested to take into consideration the influence of different ambient temperatures to the body surface skin temperature measurement for using such infrared thermometers. In US 6,056,435, there is disclosed a body temperature detector which is suited for axillary temperature measurements of adults. An internal temperature of the body is computed as a function of a target surface temperature. In this function, a weighted difference of surface temperature and ambient temperature is taken into account. The weighting is varied with a target temperature. A similar solution is disclosed in US 6,292,685. These proposals, have, however, some drawbacks. Especially, the method suggested is based on complicated theoretical models. Calculation needs relatively powerful microprocessors. In addition, there are certain concerns in view of accuracy of the calculation.

In US 5,199,436, there is disclosed a radiation detector. The detector disclosed therein is directed to a tympanic measurement. The problem of contact with the ear canal is thus not solved. A tympanic temperature is adjusted to provide an indication of core temperature. This application also has certain drawbacks. Firstly, relatively complicated calculations are proposed for adjustment of the temperature which requires powerful calculating arrangements. Secondly, the problem of contact with the ear canal is not addressed. Thirdly, by measuring the ambient temperature, inaccurate measurement results may be created if there is a difference between the cold junction of a thermopile of the infrared detector and the ambient temperature. Other radiation detectors are known from US 5,012,813, US 5,150,696, US 5,333,784, US 4,993,419, US 4,797,840, US 4,784,149, US 4,846,583, US 5,024,533, US 5,232,284 , US 5,271,407, US 5,167,235, US 5,445,158, US 5,653,238, US 5,874,736. None of these documents completely solves the above mentioned problems, namely problems associated with contact of a temperature sensor with an ear canal as well as problems related to relatively complicated prior art calculations for determining a temperature of a first body site in dependence of the measurement at another body site.

In US 5,967,992, there is disclosed a radiometric temperature measurement which is based on empirical measurements and linear functions. It is claimed that by use of lookup means, the calculation of an estimated temperature may be simplified. This solution, however, still has certain drawbacks. It is directed e.g. to a tympanic thermometer which does not solve the problem of contact between the sensor and the ear canal.

It is an object of the present invention, to overcome the drawbacks of the prior art, especially, to provide an infrared thermometer which easily allows to determine the temperature of a first body site, in particular the corresponding oral, rectal, axillary, or other body site reference temperatures based on a body surface skin temperature measurement. The thermometer according to the invention should not need powerful microcomputers for calculation of this first body site temperature. In addition, the thermometer according to the present invention should have an improved accuracy as compared to prior art thermometers.

According to the present invention, these objects are solved with a thermometer according to the independent patent claims.

The thermometer according to the invention is used for determining a temperature of a first body site. The first body site especially may be selected from the group of rectal and oral temperature. Determination of this temperature shall be made by measurement at a second body site, e.g. at the forehead surface skin of a patient. The thermometer has an infrared sensor, in particular a thermopile for detection of a body surface skin temperature at this second body site. This sensor is used for producing body surface skin temperature signal data. The thermometer is further provided with means for determining a reference temperature, namely the temperature of the cold junction of the infrared sensor or the temperature of the operating ambient air. These means for determining the reference temperature are used to produce reference operating temperature signal data. The thermometer is further provided with a calculating unit and with the memory associated with the calculating unit. The memory has data derived from clinical tests stored therein. The calculating unit is adapted to calculate an estimated temperature of the first body site on the basis of the body surface skin temperature signal data, the reference operating temperature signal data and the corresponding data stored in the memory. The design as outlined has several advantages. Firstly, the temperature may be measured at any site of the surface skin of the body. Insertion of the sensor inside the probe into the ear canal can be avoided. Secondly, the use of clinical empirical data enhances the accuracy of the calculation of the temperature at the first body site. The means for measuring the reference operating temperature may be formed by any temperature measuring unit known to one skilled in the art. According to a preferred embodiment, the means for measuring the reference operating temperature may be formed by the infrared sensor. A common infrared sensor produces a voltage output which is proportional to the temperature difference between the hot junction and the cold junction of a thermopile. The cold junction has a temperature corresponding substantially to the temperature of the ambient air. The hot junction receives the radiation of the target. Such a thermopile may be used to measure the temperature of the ambient air and thus to produce the reference operating temperature signal. The reference operating temperature may e.g. be measured by means of the infrared sensor when the thermometer is turned on. This reference temperature value may then be stored and used for calculation during the measurement at the first body site.

According to an alternative embodiment, the means for measuring a reference operating temperature may be formed by a thermistor built inside the infrared sensor, or by an infrared sensor.

The physiological site offset, i.e. the difference between the temperature measured at the second body site to the common reference body temperature at the first body site may vary and depend on many parameters. It may be difficult to find a theoretical model for these dependencies. By making reference to empirical clinical data, all these dependencies can be taken into account. In addition, the use of reference data stored in lookup tables makes calculation faster and needs less calculation resources.

According to another embodiment of the invention, the temperature sensor for measuring a reference operating signal is directly arranged in the infrared sensor. Thereby, the temperature of the cold junction of a thermopile of the infrared sensor is determined. Taking into account this temperature leads to more accurate results than taking into account only the ambient temperature.

The previously acquired clinical test data or data derived therefrom may be stored in a built-in non-volatile memory, e.g. in a ROM or EEPROM in the thermometer.

According to a further preferred embodiment, the thermometer according to the invention, especially, its calculating unit is adapted to determine the sum of a body surface skin temperature, i.e. the temperature at the second body site and of a physiological site offset value. The "physiological site offset" is defined as a difference between the measured forehead centre (or other body site) surface skin temperature and the corresponding reference body site temperature, such as the oral or rectal temperature. With the technology of the invention, the "physiological site offset" value may be accessed and added to the measured forehead centre surface skin temperature for getting the data of the corresponding reference body site temperature reading. This "physiological site offset" data can be accessed from the lookup table inside the thermometer unit's non-volatile memory, ROM, or EEPROM by taking the measured forehead centre surface skin temperature as a reference base, and the simultaneously detected operating reference temperature as an index pointer. Through a microprocessor's mathematics calculation formula, a more precise, corresponding "physiological site offset" data is determined. The use of such a physiological site offset allows a very accurate approximation of the temperature at the first body site.

According to still a further embodiment of the present invention, the physiological site offset may thus be determined based on interpolation or linear approximation techniques. If in lookup tables, reference data for reference operating temperatures measured in clinical tests and temperatures measured at the first body site during clinical tests, temperatures measured at the second body site during these tests are stored, estimated values for temperatures at the first body site may be determined by means of interpolation of these reference data.

In a further preferred embodiment, lookup tables may be used, which have a first group data related to temperature values of the second body site acquired during clinical tests, a second group of data relating to reference operating temperatures such as ambient or cold junction temperatures determined during these tests and a third group of data having data relating to temperatures which have been effectively measured at the first body site during these clinical tests. Clinical tests are made at the plurality of differed conditions, especially for different patients (sex, age) at different ambient temperatures and for patients having different body temperatures.

According to still a further preferred embodiment, the thermometer may have a plurality of operating modes. It is conceivable to provide a measurement mode and a calibration mode. The thermometer may thus have means for switching between these two modes. In the calibration mode, it is possible to make a calibration on a black body which is e.g. dipped into a water bath at controllable constant water temperature with sufficient high temperature stability. Other embodiments are conceivable: it is especially possible to provide different measurement modes for calculating estimated temperatures at different kinds of first body sites with one and the same thermometer: it thus may be possible to switch the thermometer between a calculation of corresponding oral and rectal temperatures. Different lookup tables may be stored within the thermometer and reference is made to a specific lookup table depending on the measurement mode which may be selected by the user, or preset by the manufacturer.

The invention is further directed to a method for determining a temperature of a first body site of a patient with an infrared thermometer. The method is preferably made by means of an infrared thermometer as described above. After the thermometer unit is turned on, a reference ambient temperature is detected, e.g. by the infrared sensor inside the unit, or by the thermistor built inside the infrared sensor, a reference temperature signal data is determined; after putting the thermometer probe closely onto the target surface skin to be measured, a body surface skin temperature at a second body site is measured by the same infrared sensor, a body surface skin temperature signal data is thereby produced. In a further step, a lookup table with data stored in a memory of the infrared thermometer is accessed by a calculating unit. Based on the data of the lookup table, the measured body surface skin temperature signal data and the measured reference operating temperature signal, an estimated temperature of the first body site is determined with a calculating unit within the infrared thermometer.

Therefore, the present invention brings a different "physiological site offset" value between different measured forehead skin temperature and the concurrently detected corresponding body site temperature under different simultaneously sensed operating ambient temperature on the basis of the substantial number of the test target out of the repeated comprehensive clinical test results done in a hospital.

By using this technology, through detecting the forehead skin temperature, sensing a concurrent operating reference temperature, the microprocessor inside the thermometer can immediately find a compensated offset value from the lookup table in the thermometer's EEPROM for adding together with the measured forehead temperature, to form a result as equivalent to the corresponding reference body site temperature without the concern of the ambient temperature change to influence the forehead skin temperature detection.

### DETAILED DESCRIPTION OF THE INVENTION

The invention will be more clearly understood with reference to the following embodiments and the attached drawings, in which:
- Fig. 1 and 2: show a schematic representation of a thermometer according to the invention.
- Fig. 3: schematically shows a block diagram of electronic key components of the thermometer according to the invention.
- Fig.4: shows a chart showing different oral temperatures in dependence on corresponding simultaneous measured forehead temperatures and concurrent ambient temperatures.
- Fig. 5: shows a chart showing different simultaneous physiological sites of said temperatures based on concurrent ambient temperature values.
- Fig. 6: shows a chart of physiological site offset temperature between the oral and concurrent forehead temperature based on different simultaneous ambient temperature data value.
- Fig. 7: schematically shows calculation of estimated physiological offset values based on interpolation techniques.

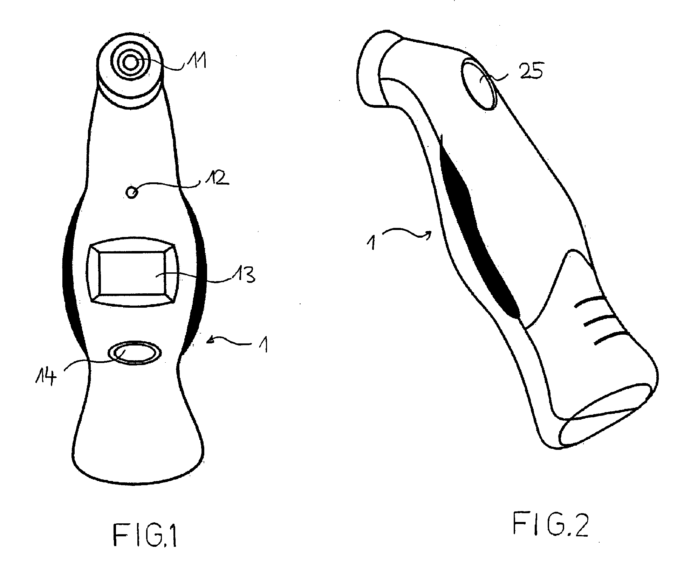

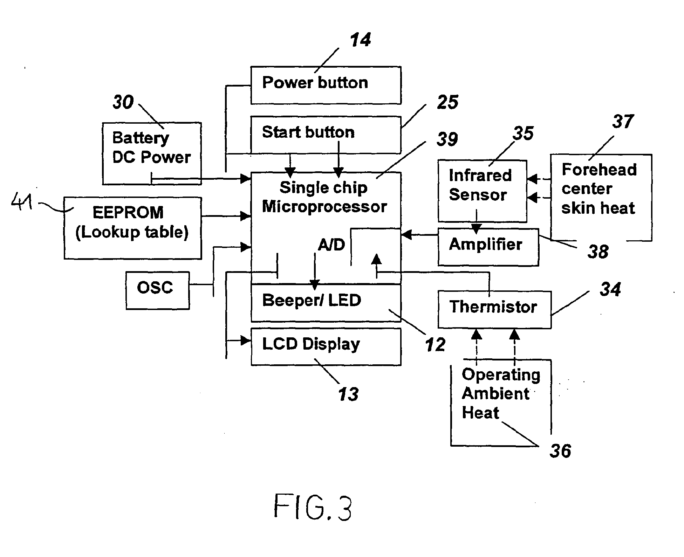

Fig. 1 and Fig. 2 illustrate an infrared thermometer 1 suitable for forehead centre surface skin or body site surface skin temperature measurement. Pressing a power switch 14 will turn on a thermometer unit. In one embodiment of the invention, the ambient temperature is then measured by means of an infrared sensor 11. In another embodiment, the reference temperature will be measured with or by a thermistor 34 built inside the infrared sensor. A LCD display 13 will be shown with a display check and ready signal for body temperature measuring by flashing the temperature scale icon with a short beep. After a temperature scale icon starts flashing on the LCD display 13, and putting the probe front cup onto the measuring target surface skin closely, pressing a measurement start button 25 (see Fig. 2) will start measuring a target temperature, the body surface skin temperature. An infrared sensor 11 located in the housing probe views and receives the forehead centre surface skin heat radiation. A DC output of the infrared sensor is proportional to the difference between the target temperature and the ambient temperature. The DC voltage output from the infrared sensor and/or the thermistor is then conducted to an amplifier 38, an A/D converter, then to a microprocessor 39 (see Fig. 3). Based on the measured target temperature such as the forehead centre skin temperature and the concurrently measured operating reference temperature such as the ambient or the cold junction temperature, a corresponding physiological site offset value from a lookup table inside a non-volatile memory or ROM, or EEPROM may be accessed and added onto the measured forehead centre skin temperature. Then a final corresponding body site temperature, as oral or rectal temperature, will be displayed on the LCD 13. A buzzer and a LED 12 will be activated for identifying the completion of the temperature measurement.

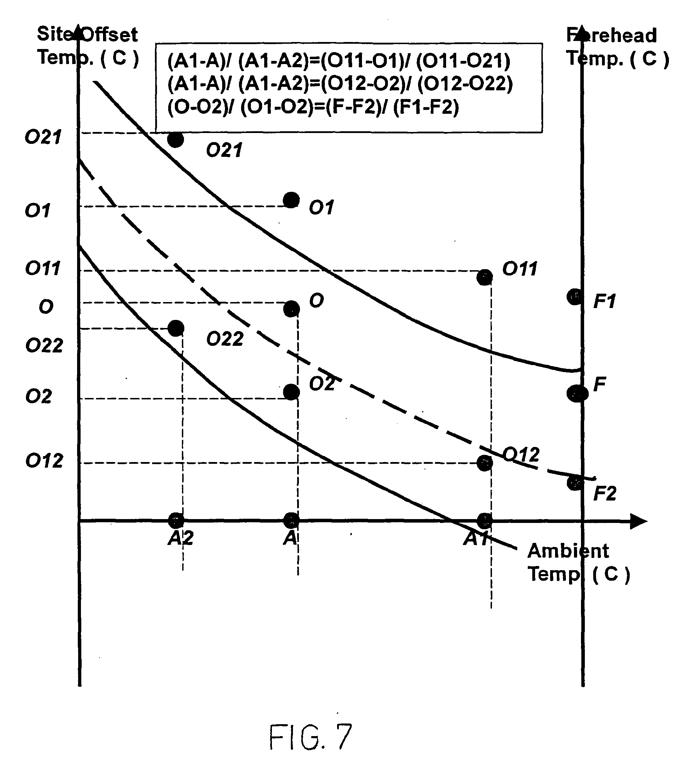

Referring to Fig. 3, an electronic block diagram of the infrared forehead skin thermometer is shown. A thermometer electronic unit is powered by a battery 30. Once the thermometer unit has been switched on by pressing the power switch 14, the infrared sensor 35 or the thermistor 34 inside the infrared sensor will first detect the temperature of a reference operating temperature, such as the ambient heat 36, then the LCD display 13 will be self checked and show a ready signal by flashing a temperature scale icon. After putting on the front open cup of the unit onto the target surface skin and pressing the measurement start button 25, the sensor 34 receives and measures the infrared radiation from the target forehead centre skin heat 37. The above two temperature sensing DC output signals are then successively conducted to an amplifier 38. A single chip microprocessor 39 is used to access or calculate an appropriate physiological site offset value based on the detected reference temperature data and the target forehead temperature data. By using a mathematical interpolation method (see Fig. 7) a corresponding physiological site offset value is determined from the lookup table inside an EEPROM 41. This offset is added to the detected forehead temperature as a final estimation of a temperature at a body site different from the measurement site. This final reading value represents the concurrent, corresponding oral, rectal, or other reference body site temperature will be then shown on the LCD display 32 through the single chip microprocessor 39. A buzzer and LED 12 will be activated simultaneously.

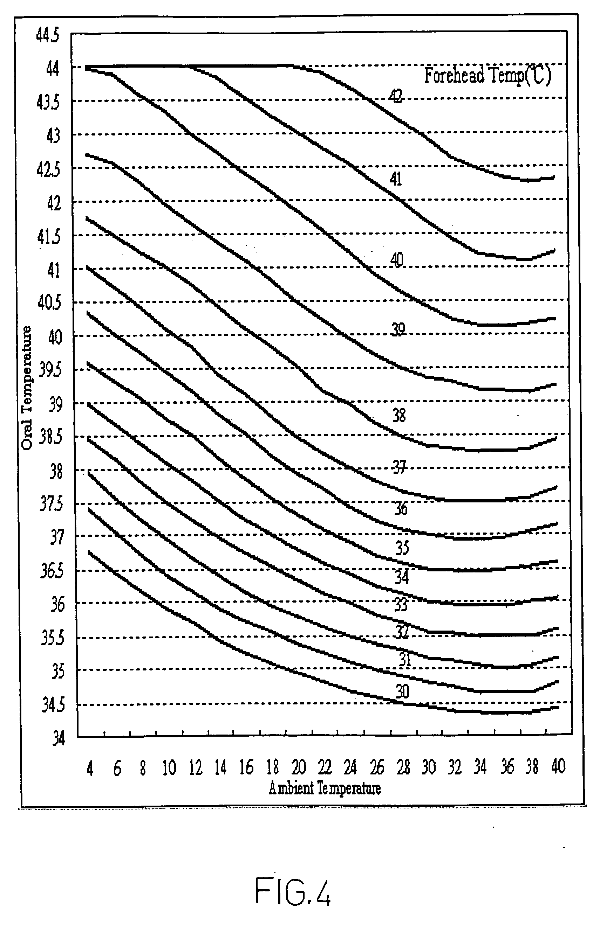

Fig. 4 shows a relationship chart between different oral temperatures and the concurrently measured forehead skin temperatures under different simultaneously detected operating ambient temperature based on the comprehensive clinical test result. This chart gives the idea that different corresponding oral temperature will be got with different concurrently measured forehead skin temperature under different simultaneously sensed operating ambient temperature.

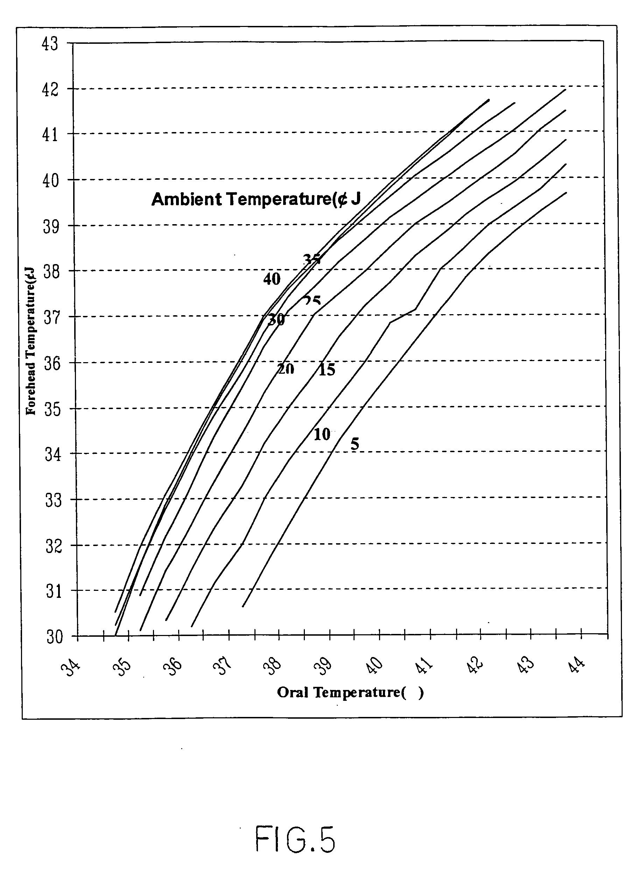

Fig. 5 illustrates a clinical test relation chart between the data of the forehead centre skin temperature reading, the concurrent measured ambient temperature, the concurrent sensed oral temperature for different ambient temperatures. Fig. 5 is a similar relation chart as Fig. 4, but having different coordinate axis.

All the above curve charts are showing a relation curve between different oral temperatures, different concurrent forehead centre skin temperatures, and different operating ambient temperatures measured simultaneously in the clinical test done in the hospital with a variety of patients e.g. with fever, non-fever, different ages, such as adults, infants, children of different sex. Based on Fig 4, 5, 6, a comprehensive clinical test database has been systematically collected and was stored into a lookup table inside the non-volatile memory, ROM, or EEPROM 41 of the thermometer electronics.

Fig. 7 illustrates the relationship chart between different operating ambient temperature and different concurrent physiological site offset temperature i.e. the difference between the forehead skin temperature and the concurrently measured oral or rectal temperature, under different simultaneously detected operating ambient temperatures which forms the comprehensive clinical tests. The physiological site offset temperature here is the difference between the oral or rectal temperature and the concurrent forehead skin temperature under simultaneous operating ambient temperature. This chart shows that different physiological site offset data will be got with different concurrent operating ambient temperature and different simultaneous forehead skin temperature.

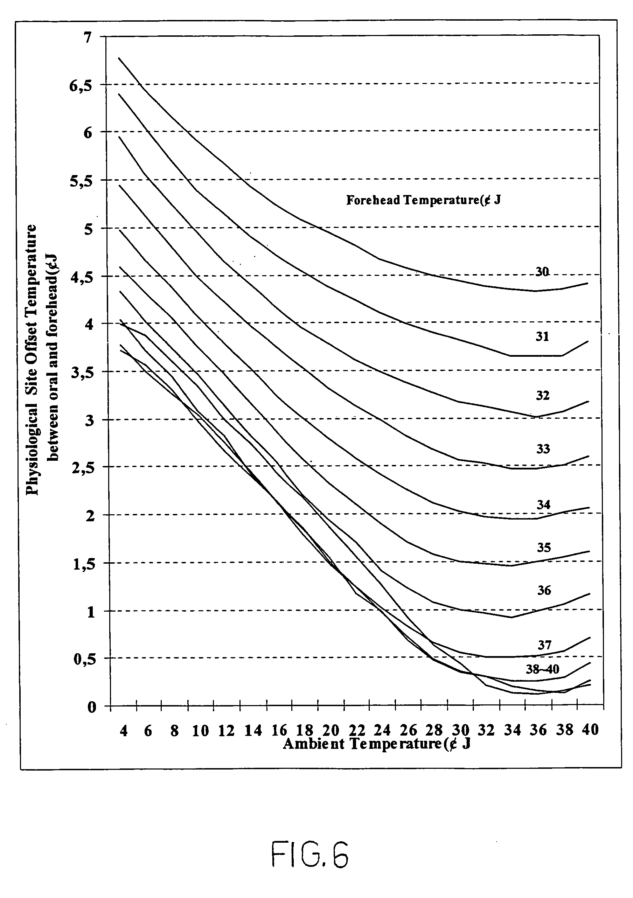

Fig. 7 illustrates a magnification portion as part of Fig. 6, showing how a microprocessor may calculate the desired physiological site offset temperature between the target forehead (second body site) and an oral or rectal temperature (first body site) based on the measured forehead temperature, concurrent detected reference operating temperatures, e.g. ambient temperature. Two adjacent reference temperature data plus two adjacent forehead temperature data accessing from the lookup table database are used thereto.

The following mathematical interpolation method and its formulas explain how a corresponding physiological site offset value may be determined from a lookup table based on a forehead centre surface temperature and its concurrently measured operating ambient temperature:

Referring to Fig. 7, the following variables will be used and have the following meaning:
- F:: The measured target forehead centre surface skin temperature.
- F1:: One of the forehead temperature values stored in the lookup table deriving from the clinical test done in hospital. "F1" is adjacent to but greater than "F", the measured target forehead skin temperature.
- F2:: Another forehead temperature value stored in the lookup table deriving from the clinical test done in a hospital. "F2" is adjacent to but smaller than "F", the measured target forehead skin temperature.
- A:: The ambient temperature value concurrently measured with the target forehead skin temperature "F".
- A1:: One of the Operating ambient temperature values stored in the lookup table deriving from the clinical test done in hospital. "A1" is adjacent to but greater than "A", the concurrently measured operating ambient temperature.
- A2:: Another Operating ambient temperature value stored in the lookup table deriving from the clinical test done in hospital. "A2" is adjacent to but greater than "A", the concurrently measured operating ambient temperature.
- O11:: A physiological site offset value stored in the lookup table, i.e. the difference between the measured oral temperature, and the concurrently measured forehead skin temperature "F1", under the simultaneously sensed operating ambient temperature "A1". "O11" is therefore corresponding to "A1" and F1.
- 012:: A physiological site offset value stored in the lookup table, i.e. the difference between the measured oral temperature, and the concurrently measured forehead skin temperature "F2", under the simultaneously sensed operating ambient temperature "A1". "O12" is therefore corresponding to "A1" and F2.
- 021:: A physiological site offset value stored in the lookup table, i.e the difference between the measured oral temperature, and the concurrently measured forehead skin temperature "F1", under the simultaneous sensed operating ambient temperature "A2". "O21" is therefore corresponding to "A2" and "F1".
- 022:: A physiological site offset value stored in the lookup table, i.e the difference between the measured oral temperature, and the concurrently measured forehead skin temperature "F2", under the simultaneous sensed operating ambient temperature "A2". "O22" is therefore corresponding to "A2" and "F2".

The following variables are unknown and are to be calculated:
- O1:: A physiological site offset value, is determined from the following formula, based on the measured operating ambient temperature "A", and a concurrently measured forehead centre skin temperature "F1". "O1" is therefore corresponding to "A" and "F1".
- O2:: A physiological site offset value, is determined from the following formula, based on the measured oral temperature "A", and the concurrently measured forehead centre skin temperature "F2". "O2" is therefore corresponding to "A" and "F2".
- O:: An estimated real physiological site offset value is calculated on the basis of the lookup table, the measured ambient temperature "A", and the concurrently detected forehead centre skin temperature "F". "O" is therefore corresponding to "A" and "F".

For determining O1, a linear interpolation is made on the basis of other variables which are known or can be accessed from the lookup table:
From
   (A1-A)/ (A1-A2) = (O11-O1)/ (O11-O21)
   there follows
   O1=O11-[(A1-A)* (O11-O21)/ (A1-A2)]
For determining "O2" a linear interpolation is made in a similar way.
   From
   (A1-A)/ (A1-A2) = (O12-O2)/ (O12-O22)
   there follows
   O2=O12-[(A1-A)* (O12-O22)/ (A1-A2)]
For getting "O" (The unknown variable here, and the actual physiological site offset data value) a linear interpolation is made. From the above mathematical calculation results and
From
   (O-O2)/ (O1-O2) = (F-F2)/ (F1-F2)
   there follows
   O=O2+ [(F-F2)* (O1-O2) (F1-F2)]

The final reading display of this forehead (or other body site) surface skin thermometer is an estimation of the temperature at a first body site (e.g. oral) on the basis of a measurement at a 2^{nd} body site (e.g. the forehead).

The final body temperature reading display equals to F+O.

"F" is the measured target forehead centre surface skin temperature at the second site; while "O" is the corresponding calculated physiological offset value between the forehead centre skin temperature and the temperature at the first site.

Based on the measured forehead skin temperature and the concurrently detected operating ambient temperature, the above calculation method is called the mathematical interpolation method, which can allow to calculate an offset value by getting and averaging two adjacent collected offset data from a lookup table, with the adjacent data as one smaller while another larger than the desired offset value. From the lookup table, the microprocessor will first take two ambient temperature data "A1" and "A2", adjacent the measured ambient temperature data. Two forehead temperature data adjacent "F1", "F2", adjacent to the measured forehead temperature will be determined. Four corresponding physiological site offset data "O11", "O12", "O21", and "O22", are then accessed referring to the above mathematical calculations. Through the above mathematical formulas, the estimated corresponding offset value "O", is then determined, on the basis of the measured forehead skin temperature "F", and the simultaneously detected operating ambient temperature "A. Then, this offset data is added to the detected forehead skin temperature. A final corresponding body site (such as oral or rectal) temperature is then displayed, taking into consideration of ambient temperature change. Instead of ambient temperatures A, A1, A2 cold junction temperatures may be measured and used.

## Claims

1. An infrared thermometer (1) for determining a temperature of a first body site of a patient, preferably selected from the group of rectal and oral temperatures, by a measurement at a second body site, preferably the forehead centre surface skin or other body site surface skin, said thermometer having
- an infrared sensor (11) for detection of a surface skin temperature (F) at said second body site and for producing surface temperature signal data;
- sensor means (11; 34) for measuring a reference temperature, particularly the ambient temperature or the temperature of a cold junction of said infrared sensor, and for producing reference operating temperature signal data (A);
- a calculating unit (39) and
- a memory (41) associated with the calculating unit; said memory (41) having reference data, preferably derived from clinical tests, stored therein, whereby said calculating unit is adapted to calculate an estimated temperature (F+O) of said first body site on the basis of said surface temperature data (F), said concurrently detected reference operating temperature data (A) and said reference data.

2. A thermometer according to claim 1, wherein said temperature sensor (34) is arranged within said infrared sensor (11).

3. A thermometer according to one of the claims 1 or 2, wherein said reference data are stored in a non-volatile memory, especially in a ROM or EEPROM.

4. A thermometer according to one of the claims 1 to 3, wherein the calculating unit is adapted to determine the sum of said body surface skin temperature data(F) and a physiological site offset value (O), determined on the basis of said detected reference operating temperature data (A), the concurrently measured body surface skin temperature data (F) and said reference data wherein (O) is equivalent to the temperature difference between the first body site and the corresponding second body site.

5. A thermometer according to one of the claims 1 to 4, wherein the temperature of the first body site is calculated on the basis of linear interpolation.

6. A thermometer according to one of the claims 1 to 5, wherein lookup tables are stored in said memory (41), said lookup tables having a first group of data relating to measured body surface skin temperature values at a second body site made during prior clinical tests, a second group of data relating to ambient temperature values concurrently measured during said prior clinical tests and a third group of data relating to temperature values measured at the first body site during said prior clinical tests.

7. A thermometer according to one of the claims 1 to 6, wherein the thermometer has at least two operating modes, a measuring mode and a calibration mode, and wherein the thermometer has means for switching between said modes.

8. A thermometer according to claim 1 to 7, wherein the thermometer has at least two different measuring modes, where the temperature at different first body sites are calculated on the basis of different sets of lookup tables stored in said memory (41) for different measuring modes.

9. A method for determining a temperature of a first body site of a patient with an infrared thermometer (1), the method comprising the steps of
- measuring a body surface skin temperature (F) at a second body site and producing body surface skin temperature signal data;
- measuring a temperature of a reference site, in particular of the cold junction or of the ambient temperature (A) and producing reference operating temperature signal data,
- accessing a lookup table with prior clinical test data stored in a memory (41) in the infrared thermometer (1) based on the measured temperature data (F) and (A),
- calculating an estimated temperature (F+O) of said first body site on the basis of said body surface skin temperature signal data(F), and said reference temperature signal data (A) and said reference data accessed in said lookup table.
